# EUROPEAN PATENT APPLICATION

(11) **EP 2 660 145 A1**
(43) Date of publication of application: **06.11.2013**
(21) Application number: 12305485.0
(22) Date of filing: 30.04.2012
(51) Int. Cl.: B64C 11/26, F01D 5/28

(54) **Propeller blade with lightweight insert**

(71) Applicant: RATIER-FIGEAC, 46100 Figeac (FR)
(72) Inventor: Seminel, Bruno, 46100 Lissac-et-Mouret (FR); Petallaz, Bruno, 46100 Béduer (FR)
(74) Representative: Leckey, David Herbert

(57) **Abstract**

A propeller blade (100) includes a foam core (104) and a structural layer (106) that surrounds at least a portion of the foam core (104) and includes a face side and a camber side. The propeller blade (100) also includes a bulkhead (105) disposed in the foam core (104) in operable contact with the face side and the camber side of the structural layer (106) and extending in a chord wise direction (Y) of the propeller blade (100).

## Description

### BACKGROUND OF THE INVENTION

The present invention relates to propellers and, in particular, to propeller blades that include a lightweight insert disposed in them.

Modem propeller blades typically include root portions which extend into the hub arm of the hub of the propeller system and which are secured to and rotatable relative to the hub arm via a retention assembly. Typically the retention assembly includes one or a plurality of ball bearing assemblies which permit the rotation of the blade in the hub arm for accomplishing pitch change of the blade for altering the speed of the propeller and accordingly, the aircraft.

The blades are typically formed by surrounding a foam spar core with a resin impregnated fabric. Leading and trailing edges of the blade are then formed over the fabric and surrounded by, for example, a Kevlar sock. Such blades are light and effective for their intended purposes.

### BRIEF DESCRIPTION OF THE INVENTION

According to one embodiment, a propeller blade that includes a foam core and a structural layer that surrounds at least a portion of the foam core and includes a face side and a camber side is disclosed. The propeller blade of this embodiment also includes a bulkhead disposed in the foam core in operable contact with the face side and the camber side of the structural layer and extending in a chord wise direction of the propeller blade.

According to another embodiment, a method of forming a propeller blade is disclosed and includes: providing a mold; disposing a bulkhead in a chord wise direction of the mold; forming a foam core; and forming a structural layer that surrounds the foam core and includes a face side and a camber side such that the face side and the camber side are in operable contact with the bulkhead.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan-view of a propeller blade according to one embodiment of the present invention;
FIGs. 2A-3C are side views that illustrate different configurations of a bulkhead that can be provided within the propeller blade shown in FIG. 1;
FIG. 3 is a cross-section of the propeller blade shown in FIG. 1; and
FIG. 4 is a perspective view of one embodiment of an insert according to the present invention.

### DETAILED DESCRIPTION OF THE INVENTION

Referring now to FIG. l, a plan view of a propeller blade 100 according to one embodiment of the present invention is illustrated. For simplicity, the direction shown by arrow X shall be referred to as the span wise direction herein and the direction shown by arrow Y shall be referred to as the chord wise direction herein.

The blade 100 is formed by first forming a spar 102. The spar 102 includes a spar foam core 104 surrounded by a structural layer 106. The core 104 is typically formed of a foam material that is injected into a mold but could also be pre-molded and machined and then inserted into the mold. The mold can include a layer of fiberglass or carbon on the walls thereof to which the foam of the core 104 adheres. As such, the core 104 can be surrounded by a layer of fiberglass or carbon (not shown) in one embodiment but this is not required. The foam that forms the core 104 can be selected from one or more of: polyurethane (PU), polyisocyanurate, or polymethacrylimide (PMI).

According to one embodiment, the blade 100 includes one or more bulkheads 105. In one embodiment, these bulkheads 105 can be provided in the mold. In such an embodiment, the foam of the core 104 is disposed within open spaces defined by the bulkheads 105. The foam of the core 104 is also disposed in the remainder of the area of the mold not occupied by the bulkheads 105. The bulkheads 105 can be formed of carbon, fiberglass or any other suitable composite or non-composite material.

The structural layer 106 is typically formed of a dry braided carbon fiber which is subsequently resin injected or a resin-impregnated fiber or fabric material (e.g. resin impregnated carbon fiber fabric) and disposed such that it surrounds the core 104 (and the fiberglass layer if it is included) by, for example, a braiding process. In one embodiment, the structural layer 106 is impregnated with a resin. In some cases, the spar 102 is heated to set the resin in the structural layer 106. With the inclusion of the bulkheads 105, the respective leading and trailing edges 115, 116 of the spar 102 are kept in a fixed relation to one another. As such, the possibility of the core 104 cracking may be reduced.

In some instances, the spar 102 is formed such that a portion of it surrounds a root portion 108 that allows the blade 100 to be connected to a hub (not shown). Rotation of the hub causes the blade 100 to rotate and, consequently, causes the generation of thrust to propel an aircraft. In the following discussion, it shall be assumed that the blade 100 rotates in the clockwise direction. The root portion 108 is sometimes referred to as a "tulip" in the industry and is typically formed of a metal.

After the spar 102 is formed, leading edge foam 112 and trailing edge foam 114 are formed on the leading and trailing edges 115, 116 respectively of the spar 102. The leading edge foam 112, trailing edge foam 114 and the spar 102 can then be encased in an outer layer 118. The outer layer 118 can be formed of Kevlar and be in the form of a sock that is pulled over the assembly that includes the leading edge foam 112, trailing edge foam 114 and the spar 102. Of course, the outer layer 118 could be formed in other manners as well.

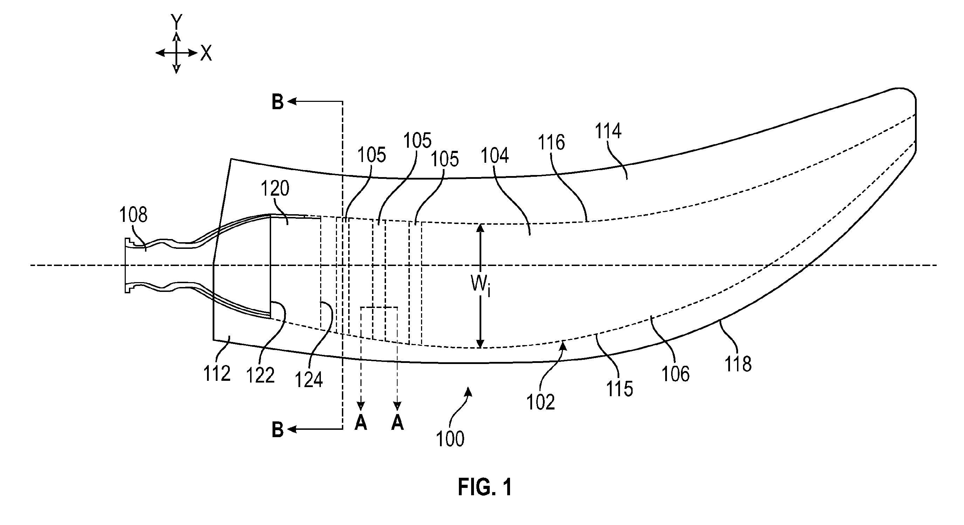

In some instances, to reduce weight, to balance the blade 100, or both, a section of the core 104 is removed. In FIG. 1, the section is illustrated by void 120. That is, within the structural layer 106, void 120 is formed between an end 122 of the root 108 and an end 124 of the core 104. The void 120 can also extend into the root 108 in one embodiment. The void 120 can be formed by removing portions of the core 104 through the root 108. The void 120 can be created before or after any of the leading edge foam 112, trailing edge foam 114 and the outer layer 118 are formed. Stated differently, the void 120 can be formed any time after the structural layer 106 is formed. In cases where the void 120 is present, the end 124 of the core 104 may extend from an edge of one of the bulkheads 105 towards the root 108. The distance the core 104 extends beyond the insert 105 in the direction of the root will vary depending on the context.

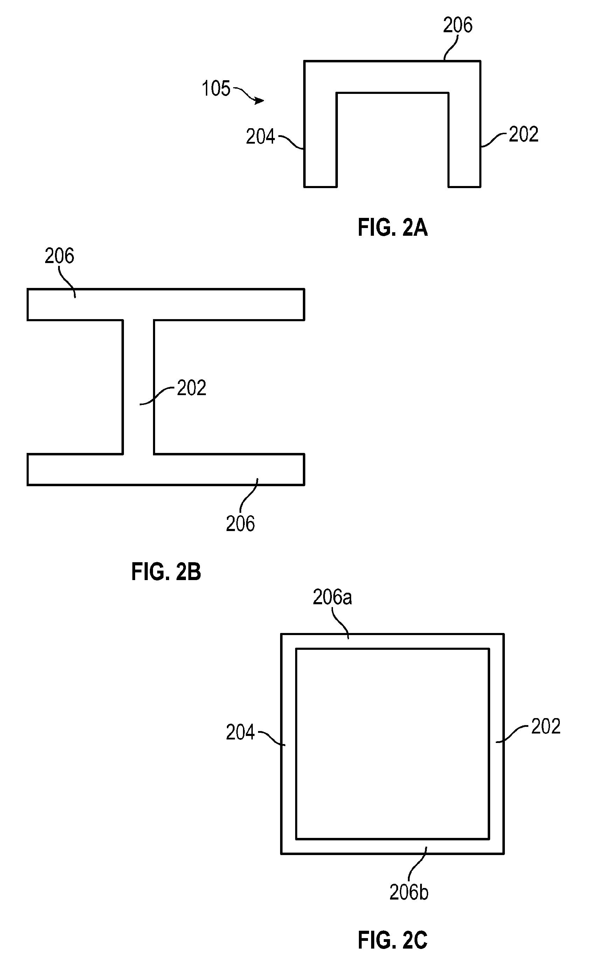

The bulkheads 105 can take on any number shapes in cross section. FIGs. 2A-2C illustrate cross-section of different embodiments of bulkheads 105 that could be utilized in accordance with the teachings herein taken along line A-A of FIG. 1.

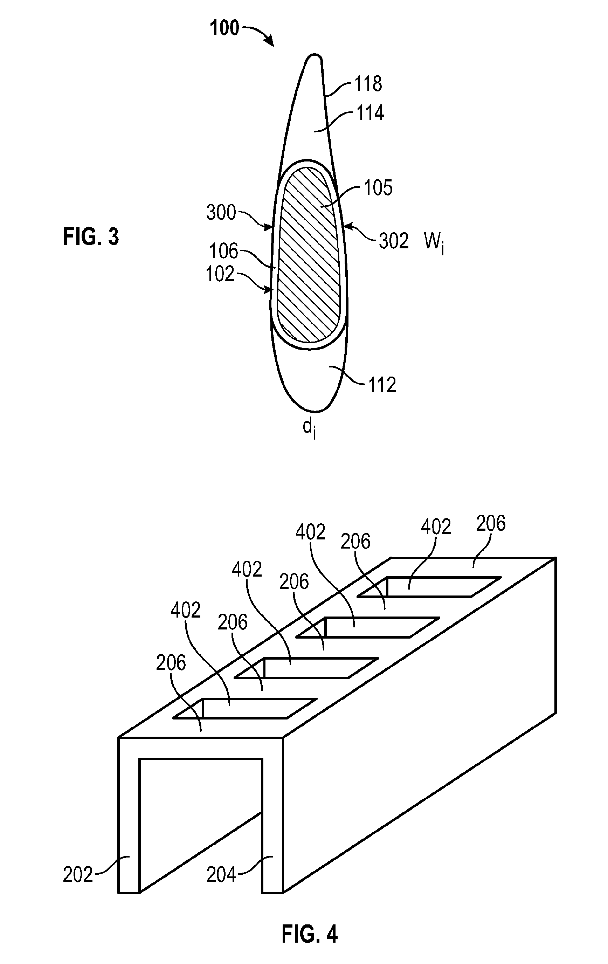

FIG. 2A illustrates a bulkhead 105 having a camber component 206 and two camber to face components 202, 204. The bulkhead 105 of FIG. 2A is arranged in chordwise direction in the spar 102 and the camber component 206 is arranged so that is contacts the camber side of the spar 102. The camber 300 and face sides 302 are defined in FIG. 3 which shows a cross section of the blade 100 taken along line B-B. The portion of bulkhead 105 illustrated in FIG. 3, could be, for example, either of the camber to face components 202, 204 of FIG. 2A or any other components that extend from the camber to the face disclosed herein.

In more detail, FIG. 2A illustrates a c-shaped bulkhead 105 that includes a camber component 206 connecting ends of the camber to face components 202 and 204. It shall be understood that the camber component 206 of FIG. 2A (as well as any other cross member 206 in any other figure) could be formed as a plurality of substantially co-planar crossmembers 206 separated by spaces 402 as is illustrated in FIG. 4. It shall be understood that the orientation of the c-shaped bulkhead 105 of FIG. 2A could be rotated 180 degrees in which case the camber component 206 could alternatively be referred to as a face component. Of course, the orientation of any of the bulkheads 105 disclosed herein could be rotated in any direction without departing from the teachings herein.

FIG. 2B illustrates an I-shaped insert 105 that includes two cross members 206 connected by a camber to face component 202 at a location that is not at the end of either cross member 206. As illustrated, the cross members 206 are perpendicular to both the camber to face component 202 As one of ordinary skill will readily understand, the cross members 206 could be disposed at other angles relative to the camber to face component 202.

FIG. 2C illustrates a box-shaped insert 105 that includes two cross members 206a and 206b that connect respective ends of the camber to face components 202 and 204

As discussed above, the bulkheads 105 disclosed herein can reduce the possibility of the spar core 104 from cracking. In addition, when loads are applied to the blade (e.g., during flight) the bulkheads 105 disclosed herein can have the effect of preventing one or both of the face side 107 and the camber side 109 bulging outward, reducing the stresses in the blade spar.

The blades 100 shown herein could be formed in many manners. For instance, the spars could be formed and then have portions removed to allow for the bulkheads to be inserted. In such a case, for instance, a portion of the spar could be removed and then the remaining portions bonded to the bulkheads that are placed in the portion of the spar that was removed. Then, as described above, the structural layer could be bonded around the combined spar/ bulkhead combination. In one embodiment, foam could be located between the one or more bulkheads.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while the various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A propeller blade (100) comprising:
a foam core (104);
a structural layer (106) that surrounds at least a portion of the foam core (104) and includes a face side and a camber side; and
a bulkhead (105) disposed in the foam core (104) in operable contact with the face side and the camber side of the structural layer and extending in a chord wise direction of the propeller blade (100).

2. The propeller blade of claim 1, further comprising:
a layer of fiberglass or carbon at least partially disposed between the foam core and the structural layer.

3. The propeller blade of claim 1, wherein the insert (105) includes a camber component (206) and two camber to face components (202,204) extending therefrom.

4. The propeller blade of claim 3, wherein the insert (105) further includes another camber component (206b) that connects the camber to face components (202,204) and is separate from the camber component (206a)..

5. The propeller blade of claim 3 or 4, wherein the camber component (206) is located at ends of one or both of the camber to face components (202,204).

6. The propeller blade of claim 3 or 4, wherein the camber component (206) is located at a location that is not at an end of one or both of the camber to face components.

7. The propeller blade of any of claims 3 to 6, wherein the camber component (206) is substantially perpendicular to one or both of the camber to face components.

8. The propeller blade of any preceding claim, further comprising:
a root (108) disposed within the structural layer (106) at an end of the propeller blade (100).

9. The propeller blade of claim 8, wherein a void (120) exists between an end of the root (108) and an end (124) of the foam core (104).

10. The propeller blade of claim 9, wherein the end (124) of the foam core (104) is closer than an end of the bulkhead (105) to the end of the root (108).

11. The propeller blade of any preceding claim, wherein the bulkhead (105) is formed of one of: fiberglass, carbon, or a combination thereof, and/or is formed of a composite material.

12. The propeller blade of any preceding claim, further comprising:
another bulkhead (105) disposed in the foam core (104) in a different location than the bulkhead (105) and in operable contact with the face side and the camber side of the structural layer (106) and extending in a chord wise direction (Y) of the propeller blade (100).

13. A method of forming a propeller blade comprising:
providing a mold;
disposing a bulkhead (105) in a chord wise direction (Y) of the mold;
forming a foam core (104); and
forming a structural layer (106) that surrounds the foam core (104) and includes a face side and a camber side such that the face side and the camber side are in operable contact with the bulkhead (105).

14. The method of claim 13, wherein the foam core (104) is formed after the bulkhead (105) has been disposed in the mold, or
wherein forming the foam core includes:
machining the foam core (104) at a location outside of the mold; and disposing the foam core (104) in the mold.

15. The method of claim 13 or 14, further comprising:
coupling a root (108) to the foam core (104);
wherein forming a structural layer (106) includes disposing the structural layer (106) over at least a portion of the root (108), and, optionally, further comprising:
removing a portion of the foam core (104) between an end (124) of the root (108) and an end of the bulkhead (105) after the structural layer (106) has been formed.
